(19) Europäisches Patentamt
European Patent Office
Office européen des brevets

(11) Publication number: **0 305 039 B1**

(12) # EUROPEAN PATENT SPECIFICATION

(45) Date of publication of patent specification: **11.11.92**

(51) Int. Cl.$^5$: **C08F 6/14**, C08J 3/02

(21) Application number: **88306335.6**

(22) Date of filing: **12.07.88**

(54) **Process for making cationic latex.**

(30) Priority: **15.07.87 FR 8709931**

(43) Date of publication of application:
**01.03.89 Bulletin 89/09**

(45) Publication of the grant of the patent:
**11.11.92 Bulletin 92/46**

(84) Designated Contracting States:
**BE CH DE ES GB IT LI NL SE**

(56) References cited:
**EP-A- 0 020 906**
**DE-A- 2 010 763**
**FR-A- 2 139 235**
**FR-A- 2 312 300**
**GB-A- 2 151 640**
**US-A- 3 205 187**

(73) Proprietor: **BASF Aktiengesellschaft**
**Carl-Bosch-Strasse 38**
**W-6700 Ludwigshafen(DE)**

(72) Inventor: **Blanpain, Peter Ronald Jeffrey**
**Haydnstraat 31**
**NL-6661 BS Elst(NL)**
Inventor: **Offner, Roland François Eugene**
**Medemblikhof 46**
**NL-6843 BS Arnhem(NL)**
Inventor: **Mori, Guy Frederic**
**2 Rue de la Zinsel**
**F-67300 Schiltigheim(FR)**

EP 0 305 039 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to cationic stabilized particles distributed throughout a liquid medium such as cationic emulsions, dispersions or latices. More particularly the present invention relates to a process to make an anionic dispersion, emulsion or latex compatible in or with a cationic emulsion.

Emulsions and dispersions are useful in a wide range of industrial processes. Many emulsions or dispersions which are naturally occuring or synthetically prepared are anionic. This means that the electrostatic charge on the particles of the dispersed phase is negative. There are instances where it would be desirable to make the latex useful in a system which has a different charge.

There has been little work in this field.

One of the earliest papers on this subject is "The Deposition of Rubbers onto Textile Fibers" by C. M. Blow, Rubber Chemistry and Technology, Vol. 11, 1938, pg. 545. Blow was interested in the deposition of natural rubber (anionic) onto wool (also anionic). To satisfactorily deposit latex on wool fiber Blow had to treat anionic natural latex to be compatible in a cationic system. To do so Blow added the natural latex to an excess of a cationic soap or stabilizer. This has become one recommended procedure for treating an anionic latex to be compatible in a cationic system and is referred to in High Polymer Latices, D. C. Blackley, MacLaren and Sons Ltd., London, 1966, Vol. I, pg. 107-110; 432-435. While the procedure produces the required compatibility it has several drawbacks. The procedure requires the rapid mixing of the latex with excess surfactant. This results in a latex having a relatively low solids content.

U.S. Patent 3,205,187 issued September 7, 1965 to John W. Vanderhoff, assigned to Dow Chemical Company discloses a process for converting an anionic latex to a cationic latex. Vanderhoff appears to have followed the Blow process in that Vanderhoff teaches adding the latex to an excess of a cationic polyelectrolyte.

British Patent Application 2,151,640A published July 24, 1985 in the name of Bayer AG discloses a process for converting an anionic emulsion to a cationic emulsion by adding an amphoteric emulsifier to the emulsion prior to adding a cationic emulsifier. The pH of the emulsion is then adjusted to an acid level. The subject matter of the present patent application is distinct over that of the British patent application as the present patent application does not contemplate the use of the amphoteric surfactants taught in the British Patent Application.

Similar teaching is contained in Canadian Patent 779,376 issued February 27, 1968 in the name of The Goodyear Tire and Rubber Company. In this patent an amphoteric surfactant which is amine based is added to an anionic latex to convert it to a cationic latex. The present patent application is distinct over the Canadian Patent in that applicant adds a dispersant to the anionic emulsion prior to making the latex compatible in a cationic system. The Canadian Patent does not disclose nor suggest the use of such a dispersant.

DE-A-2 010 763 discloses a process for converting an anionic emulsion into a cationic emulsion by adding a cationic emulsifier and a lignin derivative and then acidifying the emulsion. However, DE-A-2 010 763 states that in all cases during the conversion a sharp viscosity increase occurs and, in addition, attempts to reproduce Example 3 (II) of DE-A-2 010 763 always resulted in coagulation.

FR-A-2 139 235 discloses the testing of lignosulfonates as secondary emulsifiers in a process for the separation of chloroprene rubber from an aqueous anionic chloroprene rubber dispersion, acidification being a necessary step in such process.

However, FR-A-2 139 235 states that in all cases coagulation of the dispersion occurs. The mere use of formaldehyde-condensed naphthalene sulfonates as secondary emulsifiers to enhance latex stability and to avoid precoagulation during latex preparation in the presence of electrolytes is state of the art and is, for example, disclosed in EP-A-20906.

The conventional preparation of cationic-stabilized latices using cationic or amphoteric (i.e. cationic in an acidified medium) emulsifiers is known from FR-A2 312 300.

Applicant has been unable to locate any other published data about processes for treating anionic dispersions or emulsions so they are compatible with cationic dispersions or emulsions in which a cationic stabilizer is first added to the anionic emulsion or dispersion and the pH is dropped below 6.5. The stabilizer at a pH of 6.5 or less is cationic and is effective to stabilize the emulsion or dispersion. Conventional views on such a process are that it would likely result at least in a localized premature destabilization of the emulsion or dispersion. Additionally, under controlled laboratory conditions where such processes have been attempted it has been possible to treat the anionic emulsion but there is a high viscosity peak at a pH from about 8.5 to 6.5. While it may be possible to deal with small samples in a laboratory such processes are undesirable for industrial application. Specifically, if an anionic emulsion or dispersion is treated to be compatible with a cationic emulsion or dispersion by the addition of a cationic

emulsifier and lowering the pH, the emulsion or dispersion may go through a viscosity peak on the order of 10,000 mPa.s at a pH from about 8.5 to 6.5.

The present invention seeks to overcome the limitations in the prior art.

The present invention provides a process for treating anionically stabilized particles dispersed in a continuous liquid medium so they are compatible with cationic dispersions or emulsions, said system having a dispersed phase content of at least 50 percent by weight and a pH of not less than 8.5 which comprises adding to said system a stabilizing agent which at a pH of 6.5 or less is cationic and effective and adjusting the pH of the system to less than 6.5, characterized in that the anionic dispersion or emulsion contains a dispersing agent which is effective at a pH between 8.5 and 6.5 selected from : alkali metal salts of napthalene formaldehyde sulfonate condensates; alkaline earth metal salts of lignosulfonates; and $C_{1-4}$ alkyl aromatic sulfonate salts, and is present in an amount from 0.1 to 2 parts by weight per 100 parts by weight of said anionically stabilized particles prior to lowering the pH of the system to less than 6.5.

The present invention is suitable for use with liquid dispersions or emulsions. The discontinuous phase may be a hydrocarbon (oily phase), such as a monomer, or it may be a solid e.g. a polymer. The continuous phase is a liquid, preferably water. One of the advantages arising from the present invention is that it permits the formulation of emulsions or dispersions at mildly acidic conditions rather than under basic conditions. This gives a greater degree of freedom in compounding and using such emulsions and/or dispersions.

Emulsions or dispersions treated in accordance with the present process may still go through a viscosity peak at pH's in the range from 8.5 to 6.5. The viscosity peak may be as high as 4000 poise, preferably less than 2000 poise (as measured using a Brookfield viscometer). Most preferably there should be no viscosity build up at all.

The dispersed phase should form at least 50, preferably from 60 to 75 weight percent of the dispersion or emulsion. This refers to uncompounded systems. It is possible to treat the anionic dispersion or emulsion and subsequently compound the dispersion or emulsion using suitable fillers or other compounding ingredients compatible with a cationic dispersion or emulsion.

In the process of the present invention, a small amount, generally from 3 to 10, preferably 6 to 8 weight percent based on the weight of the dispersed phase of a surfactant which is cationic at a pH of less than 6.5 is added to the emulsion or dispersion. There are many suitable stabilizers or surfactants available. These are listed in a number of annual trade publications such as McCutcheon's's Emulsifiers and Detergents published annually by McCutcheon Division of MC Publishing Co.

Generally cationic emulsifiers are nitrogen based compounds. The compound may be an amine e.g. a fatty amine e.g. a primary amine comprising 12 to 18 carbon atoms. The amine may be a secondary amine in which the radicals are shorter chain hydroxyalkyl radicals e.g. hydroxypropyl or hydroxyethyl radicals. The amine may be reacted with ethylene oxide to increase the radical chain length if required. Amine surfactants may also be prepared by the reduction of a fatty nitrile. The amine may be a cyclic amine e.g. an imidazoline or a piperazine derivative. The amines may be quaternized if necessary for the particular application.

A preferred class of emulsifiers are the tertiary amine type emulsifiers of the formula

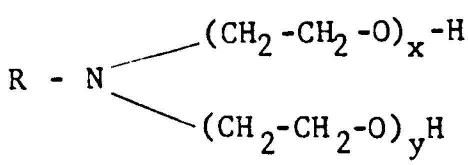

wherein R is a $C_{10-18}$ alkenyl radical and x and y are integers and the sum of x + y is from 2 to 20. Such a material is available under the tradename Noramox S-11. Such emulsifiers contain groups which form ions at a pH of less than 6.5 e.g. an amine group.

In accordance with the present invention the anionically stabilized dispersion or emulsion contains from 0.1 to 2.0, preferably from 0.2 to 1 parts by weight per 100 parts by weight of dispersed phase of a dispersing agent which is anionic or nonionic, preferably anionic which is effective at a pH from 8.5 to 6.5. The required amount of the dispersing agent is added to the dispersion or emulsion prior to lowering its pH to less than 6.5. Dispersing agents are listed in the annual trade publication Functional Materials by McCutcheons published by the MC Publishing Co. The classes of suitable dispersing agents are:

alkali metal salts of naphthalene formaldehyde sulfonate condensates;

alkaline earth metal salts of lignosulfonates; and
$C_{1-4}$ alkyl aromatic sulfonate salts.

As noted above the process of the present invention is useful in association with aqueous emulsions or dispersions. The dispersed phase may be a naturally occuring polymer e.g. natural rubber or it may be a synthetic polymer, e.g. a plastic or rubber. Some polymers are natural rubber, polybutadienes, polychloroprene, polyisoprene, polystyrenes, styrenebutadiene rubbers, polyacrylates, poly olefin-ester polymers, nitrile rubbers, co and homo polymers of vinyl and vinylidene chloride. The polymers may be prepared by emulsion polymerization in the presence of an anionic surfactant then treated to be compatible in or with cationic emulsions or dispersions. The dispersion may also be prepared from solid particulate polymer and then it may be treated to be compatible with a cationic system.

E.g. the styrene butadiene rubbers comprise: 80 to 20 weight percent of one or more monomers selected from : $C_{8-12}$ vinyl or vinylidene aromatic monomers which may be unsubstituted or substituted by a $C_{1-4}$ alkyl radical or a chlorine or bromine atom; and $C_{1-2}$ alkyl esters of acrylic or methacrylic acid; and 20 to 80 weight percent of one or more $C_{4-6}$ conjugated diolefins which may be unsubstituted or substituted by a chlorine atom.

Optionally such polymers may contain up to 10, preferably from 0.5 to 5 weight percent of one or more additional monomers selected from :
$C_{1-8}$ alkyl or hydroxy alkyl esters of $C_{3-6}$ ethylenically unsaturated carboxylic acids; and amides of $C_{3-6}$ ethylenically unsaturated carboxylic acids which amides may be unsubstituted or substituted at the nitrogen atom by up to two substituents selected from :
of $C_{1-4}$ alkyl and hydroxy alkyl radicals.

Some vinyl or vinylidene aromatic monomers are styrene, alpha methyl styrene, chlorostyrene and mixtures thereof.

Some $C_{4-6}$ conjugated diolefins are butadiene, isoprene, chloroprene and mixtures thereof.

Some additional monomers may be methyl acrylate, methyl methacrylate, ethyl acrylate, ethyl methacrylate, butyl acrylate, butyl methacrylate, ethyl hexyl acrylate, ethyl hexyl methacrylate, hydroxyethyl acrylate, hydroxyethyl methacrylate, acrylamide, methacrylamide, N-methylol acrylamide; N-methylol methacrylamide.

Some acrylate polymers comprise: at least 90 weight percent of a mixture comprising 60 to 100 weight percent of one or more $C_{1-8}$ alkyl or hydroxy alkyl esters of $C_{3-4}$ ethylenically unsaturated carboxylic acids and up to 40 weight percent of a $C_{8-12}$ vinyl or vinylidene aromatic monomer which may be unsubstituted or substituted by a $C_{1-4}$ alkyl radical or a chlorine atom; and optionally up to 10, preferably 0.5 to 5 weight percent of one or more of the above noted additional monomers.

Some $C_{1-8}$ alkyl and hydroxy alkyl esters of $C_{3-4}$ ethylenically unsaturated carboxylic acids are methyl methacrylate, methyl acrylate, ethyl acrylate, ethyl methacrylate, propyl methacrylate, propyl acrylate, butyl methacrylate, butyl acrylate, ethyl hexyl acrylate, ethyl hexyl methacrylate, hydroxy ethyl acrylate and hydroxy ethyl methacrylate.

Some vinyl or vinylidene aromatic monomers have been discussed above.

Some olefin ester polymers comprise:

up to 40, preferably from 10 to 25 weight percent of a $C_{2-3}$ olefin;

at least 60, preferably from 75 to 90 weight percent of one or more monmers selected from :
$C_{2-6}$ alkenyl or hydroxyalkenyl esters of $C_{1-6}$ saturated carboxylic acids or $C_{1-6}$ alkyl or hydroxy alkyl esters of $C_{3-6}$ ethylenically unsaturated carboxylic acids; and optionally up to 10, preferably from 0.5 to 5 weight percent of one or more of the above noted additional monomers.

Ethylene and propylene are some olefin monomers. Some ester monomers are vinyl acetate, methyl methacrylate, methyl acrylate, ethyl methacrylate, and ethyl acrylate.

The nitrile polymers may comprise:

up to 40, preferably from 15 to 40 weight percent of a $C_{3-6}$ alkenyl nitrile, preferably acrylonitrile or methacrylonitrile;

at least 60, preferably 60 to 80 weight percent of a $C_{4-6}$ conjugated diolefin, e.g. those listed above; and

optionally up to 10, preferably 0.5 to 5 weight percent of one or more additional monomers listed above.

The polybutadiene, polyisoprene and polychloroprene polymers may comprise from 85 to 100 weight percent of one or more monomers selected from :

$C_{4-6}$ aliphatic conjugated diolefins which may be unsubstituted or substituted by a chlorine atom; and optionally up to 15 weight percent of one or more of the additional monomers described above.

Some conjugated diolefins and additional monomers have been described above.

The polystyrene polymers may comprise 85 to 100 weight percent of one or more monomers selected from:

$C_{8-12}$ mono vinyl or vinylidene aromatic monomers and optionally up to 15 weight percent of one or more of the additional monomers described above. Some mono vinyl aromatic monomers and additional monomers have been described above.

Other suitable copolymers comprise

i) from 30 to 70 weight percent of one or more monomers selected from: styrene, alpha methyl styrene, chlorostyrene;

ii) from 69.5 to 25 weight percent of one or more monomers selected from: butadiene, isoprene and chloroprene; and

iii) from 0.5 to 5 weight percent of one or more monomers selcted from: methyl acrylate, methyl methacrylate, ethyl acrylate, ethyl methacrylate, butyl acrylate, butyl methacrylate, ethyl hexyl acrylate, ethyl hexyl methacrylate, hydroxyethyl acrylate, hyroxyethyl methacrylate, acrylamide, meth acrylamide, N-methylol acrylamide and N-methylol methacrylamide,

or

i) at least 95 weight percent of one or more monomers selected from: methyl methacrylate, methyl acrylate, propyl methacrylate, propylacrylate, butyl methacrylate, butyl acrylate, ethyl hexyl acrylate, ethyl hexyl methacrylate, hydroxy ethyl acrylate, and hydroxy ethyl meathacrylate;

ii) optionally from 0.5 to 5 weight percent of one or more monomers selcted from: acrylamide, methacrylamide, N-methylol acrylamide and N-methylol-methacrylamide.

The pH of the anionic emulsion or dispersion may be lowered using conventional means. The pH may be lowered using dilute acids e.g. organic acids acetic acid or inorganic acids e.g. hydrochloric acid. The acid used to lower the pH of the emulsion or dispersion should be selected so as not to significantly degrade the continuous and the discontinuous phases. The acid should be sufficiently diluted and added to the emulsion or dispersion at a rate and under stirring sufficient to prevent localized destabilization of the emulsion or dispersion. Simple testing will indicate appropriate conditions for lowering the pH of the emulsion or dispersion.

The following examples are intended to illustrate the invention. In the examples parts are parts by dry weight unless otherwise indicated.

<u>Example 1</u>

To a base latex of an anionic styrene:butadiene polymer having a bound styrene content of 24 percent, a solids content of 70 percent and a pH of about 10.8 were added 7.0 parts by weight (dry) per 100 parts by dry weight of polymer of a tertiary amine cationic stabilizer sold under the trademark Noramox S11 and 0.3 parts of an acrylic polymer. The pH of the latex was then lowered with 18 percent hydrochloric acid. The viscosity of the latex was recorded at various pH's from 10 to 3.

The results are set forth in the following table.

<u>Example 1</u> Control

| pH | Viscosity mPa.s |
|---|---|
| 11.0 | 3601 |
| 10.0 | 3400 |
| 9.4 | 3200 |
| 8.8 | 3608 |
| 8.4 | 9000 |
| 8.0 | 9900 |
| 7.0 | 8700 |
| 6.4 | 2208 |
| 6.1 | 1600 |
| 5.7 | 1404 |
| 5.3 | 1304 |
| 5.1 | 1204 |
| 4.6 | 1102 |
| 3.6 | 1004 |
| 3.2 | 1008 |

This experiment shows the increase in viscosity at a pH between 8.5 and 7 to 10,000 mPa.s.

Example 2

The control experiment was repeated except that 0.5 parts by dry weight of a dispersing agent which was the potassium salt of a naphthalene formaldehyde sulfonate condensate sold under the trademark Distagine LK, was added to the latex prior to adjusting the pH.
The viscosity measured at various pH's is as follows:

| pH | Viscosity mPa.s |
|---|---|
| 10.7 | 2508 |
| 9.3 | 2302 |
| 8.8 | 2206 |
| 8.4 | 2402 |
| 8.1 | 2309 |
| 7.9 | 2302 |
| 7.6 | 2107 |
| 7.0 | 1304 |
| 5.9 | 809 |
| 3.3 | 702 |

The use of the dispersing agent eliminates the viscosity peak at pH's from 8 to 7.

For experimental purposes the following examples were carried out. The base latex was diluted to 65-66 percent solids and 7.0 part of Noramox S11 was added to the latex per 100 parts of polymer solids.Then the specified amount of dispersing agent was compounded with the control and the pH was lowered using 18 percent HCl.
(Note: In the present invention , any numerical value, e.g. 18 percent, includes the precise value and any value "about" or "substantially" the same as the precise value.)

Example 3

The base latex was adjusted to pH 4 in the absence of dispersing agent.

| pH | Viscosity mPa.s |
|---|---|
| 10.7 | 1932 |
| 8.9 | 2168 |
| 8.65 | 2812 |
| 8.5 | 3460 |
| 8.0 | 3708 |
| 7.7 | 3912 |
| 7.35 | 3240 |
| 7.2 | 980 |
| 4.8 | 816 |
| 4.0 | 776 |

Even at diluted solids there is a viscosity peak at a pH between 8.5 ad 7.

Example 4

The control was further compounded with 0.5 parts of Distagine LK, and the pH was adjusted to 4 with 18 percent HCl.

| pH | Viscosity mPa.s |
|---|---|
| 10.7 | 2048 |
| 9.2 | 1948 |
| 8.7 | 1808 |
| 8.3 | 1780 |
| 7.95 | 1652 |
| 7.7 | 1504 |
| 7.3 | 972 |
| 6.1 | 752 |
| 5.0 | 712 |
| 4.45 | 705 |

The use of the dispersing agent eliminates the viscosity peak at pH's from 8 to 7.

Example 5

To the control were added 0.5 and 1.0 parts dispersing agent which was a Calcium lignosulfonate sold under the trademark Borresperse CAF.

| 0.5 parts | | 1.0 parts | |
|---|---|---|---|
| pH | viscosity mPa.s | pH | viscosity mPa.s |
| 10.3 | 2140 | 9.9 | 1928 |
| 9.1 | 1940 | 8.9 | 1640 |
| 8.5 | 2780 | 8.3 | 2020 |
| 7.8 | 3080 | 7.9 | 2420 |
| 6.8 | 860 | 7.3 | 1860 |
| 5.4 | 832 | 5.5 | 740 |
| 3.2 | 720 | 3.1 | 980 |

This experiment shows lignosulfonates are effective at relative higher concentrations.

Example 6

To the control were added 0.5 parts of a dispersing agent which was a sodium salt of napthalene

formaldehyde sulfonate condensate sold under the trademark Distagine LS.

| pH | Viscosity mPa.s |
|---|---|
| 10.7 | 2260 |
| 9.2 | 1912 |
| 8.6 | 1820 |
| 7.8 | 1580 |
| 6.0 | 688 |
| 2.9 | 660 |

Again the viscosity peak has been eliminated.

Example 7

To the control were added 0.5 parts of a dispersing agent which was a higher weight condensation product of napthalene formaldehyde sulfonate condensate sold under the trademark Lomar D.

| pH | Viscosity mPa.s |
|---|---|
| 10.7 | 2140 |
| 9.3 | 2120 |
| 8.6 | 2320 |
| 7.8 | 2040 |
| 7.2 | 768 |
| 5.8 | 712 |
| 3.1 | 680 |

The viscosity peak has been controlled.

Comparative Example

Individually, to the control were added to the following dispersing agents in the following amounts.
0.5 parts nonylphenolpolyethylene oxide (10 moles) sold under the trademark Triton X100
0.5 parts nonylphenolpolyethylene oxide (40 moles) sold under the trademark Triton X405
1.0 parts nonylphenolpolyethylene oxide (40 moles) sold under the trademark Triton X405

| 0.5 Triton X-100 | | 0.5 Triton X-405 | | 1.0 Triton X-405 | |
|---|---|---|---|---|---|
| pH | Viscosity mPa.s | pH | Viscosity mPa.s | pH | viscosity mPa.s |
| 10.7 | 2300 | 10.7 | 1680 | 10.5 | 1640 |
| 9.2 | 2272 | 9.3 | 1512 | 9.2 | 1504 |
| 8.6 | 3340 | 8.5 | 2844 | 8.6 | 2440 |
| 7.7 | 4000 | 7.6 | 3240 | 8.3 | 3100 |
| 5.8 | 860 | 5.7 | 520 | 7.7 | 3200 |
| 2.9 | 792 | 3.0 | 440 | 5.7 | 660 |
| | | | | 2.8 | 520 |

This experiment shows that the alkyl phenol polyalkylene oxide type dispersing agents are not very useful in this application.

Example 8

To the control were added 0.5 and 1.0 parts of a dispersing agent which was a potassium toluene sulfonate sold under the trademark Eltesol PT 45.

| 0.5 parts | | 1.0 parts | |
|---|---|---|---|
| pH | viscosity mPa.s | pH | viscosity mPa.s |
| 10.7 | 1940 | 10.4 | 1824 |
| 9.3 | 1780 | 8.6 | 2712 |
| 8.6 | 2772 | 8.1 | 2672 |
| 7.8 | 3080 | 7.6 | 2640 |
| 5.9 | 840 | 6.0 | 860 |
| 2.8 | 792 | | |

This experiment shows that relatively larger amounts of sodium toluene sulfonate is required to reduce the viscosity rise.

A further series of experiments were carried out with the same procedure using other classes of dispersing agents. These agents failed to keep the viscosity below 4000 mPa.s.

| Experiment A 0.5 parts-sodium dodecyl benzene sulfonate | | Experiment B 0.5 parts of sodium lauryl sulfate | | Experiment C 0.5 parts of poly glycol ether phosphate | |
|---|---|---|---|---|---|
| pH | viscosity mPa.s | pH | viscosity mPa.s | pH | viscosity mPa.s |
| 10.8 | 2340 | 10.7 | 2300 | 10.0 | 2140 |
| 9.2 | 2720 | 9.2 | 2280 | 8.9 | 2600 |
| 8.8 | 4000 | 8.6 | 3664 | 8.6 | 3740 |
| 7.4 | 3740 | 8.0 | 4000 | 8.4 | 3936 |
| 7.0 | 1024 | 7.2 | 1500 | 7.3 | 2020 |
| 5.9 | 820 | 6.1 | 900 | 5.6 | 1000 |
| 3.8 | 756 | 3.0 | 820 | 2.8 | 892 |
| 2.9 | 740 | | | | |

Experiments A, B and C are comparative experiments which do not illustrate nor form part of the invention but show that it is not merely the addition of any dispersing agent which controls the viscosity rise.

To simplify comparing data of Example 3, 7, the first comparative example, and experiments A and B applicant plotted the viscosity as a function of pH for each experiment. The viscosity was then determined at a series of fixed pH values for each experiment. The results of the analysis is shown in the following tables:

TABLE 1

Latex Viscosity (mPa.s)

| PRODUCT LEVEL (PHR) | NONE 0 | DISTAGINE LK 0,5 | BORRESPERSE CAF 0,5 | BORRESPERSE CAF 1,0 | DISTAGINE LS 0,5 | LOMAR D 0,5 | ELTESOL PT 45 0,5 | ELTESOL PT 45 1,0 |
|---|---|---|---|---|---|---|---|---|
| pH | | | | | | | | |
| 10,7 | 1.932 | 2.048 | - | - | 2.260 | 2.140 | 1.940 | 1.850 |
| 10,3 | 1.900 | 2.040 | 2.140 | 2.040 | 2.155 | 2.120 | 1.895 | 1.805 |
| 8,9 | 2.168 | 1.870 | 2.160 | 1.640 | 1.880 | 2.215 | 2.230 | 2.080 |
| 8,5 | 3.460 | 1.790 | 2.780 | 1.860 | 1.800 | 2.330 | 3.000 | 2.700 |
| 7,8 | 3.840 | 1.550 | 3.080 | 2.510 | 1.580 | 2.040 | 3.080 | 2.650 |
| 7,3 | 3.200 | 972 | 1.960 | 1.860 | 1.200 | 980 | 2.050 | 2.040 |
| 6,8 | 950 | 842 | 860 | 760 | 870 | 745 | 935 | 965 |
| 5,5 | 860 | 725 | 840 | 740 | 685 | 705 | 835 | 840 |
| 4,0 | 776 | 675 | 755 | 670 | 670 | 700 | 805 | 825 |
| 3,0 | 700 | 640 | 605 | 980 | 660 | 680 | 795 | 805 |

TABLE 2

Latex Viscosity (mPa.s)

| PRODUCT LEVEL (PHR) | TRITON X 100 0,5 | TRITON X 405 0,5 | TRITON X 405 1,0 | EXPERIMENT A 0,5 | EXPERIMENT B 0,5 | EXPERIMENT C 0,5 |
|---|---|---|---|---|---|---|
| pH | | | | | | |
| 10,7 | 2.300 | 1.680 | 1.660 | 2.365 | 2.300 | - |
| 10,3 | 2.290 | 1.630 | 1.620 | 2.440 | 2.295 | - |
| 8,9 | 2.700 | 2.170 | 1.950 | 3.750 | 3.000 | 2.600 |
| 8,5 | 3.420 | 2.840 | 2.640 | 4.230 | 3.720 | 3.845 |
| 7,8 | 3.930 | 3.720 | 3.480 | 4.700 | 4.080 | 3.900 |
| 7,3 | 2.150 | 2.140 | 1.470 | 2.950 | 1.900 | 2.020 |
| 6,8 | 965 | 665 | 965 | 960 | 1.060 | 1.245 |
| 5,5 | 850 | 520 | 650 | 805 | 880 | 995 |
| 4,0 | 815 | 475 | 580 | 765 | 835 | 935 |
| 3,0 | 790 | 440 | 535 | 740 | 820 | 895 |

## Claims

1. A process for treating anionically stabilized particles dispersed in a continuous liquid medium, so they are compatible with cationic dispersions or emulsions, said system having a dispersed phase content of at least 50 percent by weight and a pH of not less than 8.5 which comprises adding to said system a stabilizing agent which at a pH of 6.5 or less is cationic and effective and adjusting the pH of the system to less than 6.5, characterized in that the anionic dispersion or emulsion contains a dispersing

agent which is effective at a pH between 8.5 and 6.5 selected from: alkali metal salts of napthalene formaldehyde sulfonate condensates; alkaline earth metal salts of lignosulfonates; and $C_{1-4}$ alkyl aromatic sulfonate salts and is present in an amount from 0.1 to 2 parts by weight per 100 parts by weight of said anionically stabilized particles prior to lowering the pH of the system to less than 6.5.

**2.** A process as in claim 1, characterized in that said stabilizing agent effective at a pH of less than 6.5 is added in an amount from 3 to 10 percent by weight based on the weight of said anionically stabilized particles.

**3.** A process as in claim 2, characterized in that said liquid medium is water and said anionically stabilized particles are polymeric particles selected from:
(a) copolymers comprising:
(i) from 20 to 80 weight percent of a $C_{4-6}$ aliphatic conjugated diolefin which is unsubstituted or substituted by a chlorine atom;
(ii) from 80 to 20 weight percent of one or more monomers selected from:
$C_{8-12}$ vinyl or vinylidene aromatic monomers which may be unsubstituted or substituted by a $C_{1-4}$ alkyl radical or a chlorine or bromine atom; $C_{1-2}$ alkyl esters of acrylic or methacrylic acid monomers and
(iii) optionally from 0.5 to 10 weight percent of one or more monomers selected from:
$_{1-8}$alkyl or hydroxy alkyl esters of $C_{3-6}$ ethylenically unsaturated carboxylic acid; and amides of $C_{3-6}$ ethylenically unsaturated carboxylic acids which amides may be unsubstituted or substituted at the nitrogen atom by up to two substituents selected from:
$C_{1-4}$ alkyl and hydroxyalkyl radicals;
(b) co or homo polymers comprising:
(i) from 80 to 100 weight percent of a mixture comprising from 60 to 100 weight percent of one or more $C_{1-8}$ alkyl or hydroxy alkyl esters of a $C_{3-4}$ ethylenically unsaturated carboxylic acid and up to 40 weight percent of a $C_{8-12}$ vinyl or vinylidene aromatic monomer which may be unsubstituted or substituted by a $C_{1-4}$ alkyl radical or a chlorine atom; and
(ii) optionally from 0.5 to 10 weight percent of one or more monomers selected from:
$C_{1-8}$ alkyl or hydroxy alkyl esters of $C_{3-6}$ ethylenically unsaturated carboxylic acid., and amides of $C_{3-6}$ ethylenically unsaturated carboxylic acids which amides may be unsubstituted or substituted at the nitrogen atom by up to two substituents selected from :
$C_{1-4}$ alkyl and hydroxyalkyl radicals;
(c) copolymers comprising:
(i) up to 40 weight percent of a $C_{3-6}$ alkenyl nitrile;
(ii) at least 60 percent of a $C_{4-6}$ conjugated diolefin; and
(iii) optionally from 0.5 to 10 weight percent of one or more monomers selected from:
$C_{1-8}$ alkyl or hydroxy alkyl esters of $C_{3-6}$ ethylenically unsaturated carboxylic acid; and amides of $C_{3-6}$ ethylenically unsaturated carboxylic acids which amides may be unsubstituted or substituted at the nitrogen atom by up to two substituents selected from :
$C_{1-4}$ alkyl and hydroxyalkyl radicals;
(d) copolymers comprising:
(i) up to 25 weight percent of a $C_{2-3}$ olefin;
(ii) at least 75 weight percent of one or more monomers selected from : $C_{2-6}$ alkenyl or hydroxy alkenyl esters of $C_{1-6}$ saturated carboxylic acids and $C_{1-6}$ alkyl or hydroxy alkyl ester of $C_{3-6}$ ethylenically unsaturated carboxylic acids;
(iii) and optionally from 0.5 to 10 weight percent of one or more monomers selected from:
$C_{1-8}$ alkyl or hydroxy alkyl esters of $C_{3-6}$ ethylenically unsaturated carboxylic acid; and amides of $C_{3-6}$ ethylenically unsaturated carboxylic acids which amides may be unsubstituted or substituted at the nitrogen atom by up to two substituents selected from:
$C_{1-4}$ alkyl and hydroxyalkyl radicals; and
(e) natural rubber
(f) co or homo polymers comprising:
(i) from 85 to 100 weight percent of one or more monomers selected from :
$C_{4-6}$ aliphatic conjugated diolefins which may be unsubstituted or substituted by a chlorine atom; and
(ii) up to 15 weight percent of one or more monomers selected from: $C_{1-8}$ alkyl or hydroxy alkyl esters of $C_{3-6}$ ethylenically unsaturated carboxylic acid; and amides of $C_{3-6}$ ethylenically

unsaturated carboxylic acids which amides may be unsubstituted or substituted at the nitrogen atom by up to two substituents selected from: $C_{1-4}$ alkyl and hydroxyalkyl radicals.

(g) co or homopolymers comprising:

i) from 85 to 100 weight percent of one or more monomers selected from :

$C_{8-12}$ vinyl or vinylidene aromatic monomers which may be unsubstituted or substituted by a $C_{1-4}$ alkyl radical or a chlorine or bromine atom; and

(ii) up to 15 weight percent of one or more monomers selected from : $C_{1-8}$ alkyl or hydroxy alkyl esters of $C_{3-6}$ ethylenically unsaturated carboxylic acid; and amides of $C_{3-6}$ ethylenically unsaturated carboxylic acids which amides may be unsubstituted or substituted at the nitrogen atom by up to two substituents selected from: $C_{1-4}$ alkyl and hydroxyalkyl radicals.

**4.** A process as in claim 3, characterized in that said stabilizer effective at a pH of less than 6.5 is present in an amount from 5 to 10 weight percent of said polymer and is an amine of the formula

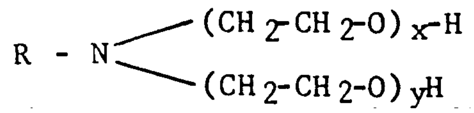

wherein R is a $C_{10-18}$ alkenyl radical and x and y are integers and the sum of x + y is from 2 to 20.

**5.** A process as in claim 4, characterized in that said polymer comprises:

(i) from 30 to 70 weight percent of one or more monomer selected from:

styrene, alpha methyl styrene, chlorostyrene;

(ii) from 69.5 to 25 weight percent of one or more monomers selected from :

butadiene, isoprene and chloroprene; and

(iii) from 0.5 to 5 weight percent of one or more monomers selected from :

methyl acrylate, methyl methacrylate, ethyl acrylate, ethyl methacrylate, butyl acrylate, butyl methacrylate, ethyl hexyl acrylate, ethyl hexyl methacrylate, hydroxyethyl acrylate, hydroxyethyl methacrylate, acrylamide, meth acrylamide, N-methylol acrylamide; N-methylol methacrylamide.

**6.** A process as in claim 4, characterized in that said polymer comprises:

(i) at least 95 weight percent of one or more monomers selected from :

methyl methacrylate, methyl acrylate, propyl methacrylate, propylacrylate, butyl methacrylate, butyl acrylate, ethyl hexyl acrylate, ethyl hexyl methacrylate, hydroxy ethyl acrylate, and hydroxy ethyl methacrylate;

(ii) optionally from 0.5 to 5 weight percent of one or more monomers selected from :

acrylamide, methacrylamide., N-methylol acrylamide, N-methylol-methacrylamide.

**7.** A process as in claim 4, characterized in that said polymer comprises:

(i) from 10 to 25 weight percent of ethylene or propylene;

(ii) from 75 to 90 weight percent of one or more monomers selected from :

vinyl acetate, methyl methacrylate, methyl acrylate, ethyl methacrylate, and ethyl acrylate; and

(iii) optionally from 0.5 to 5 weight percent of one or more monomers selected from:

methyl acrylate, methy methacrylate, ethyl acrylate, ethyl methacrylate, butyl acrylate, butyl methacrylate, ethyl hexyl acrylate, ethyl hexyl methacrylate, hydroxyethyl acrylate, hydroxyethyl methacrylate, acrylamide, meth acrylamide, N-methylol acrylamide; N-methylol methacrylamide.

**8.** A process as in claim 4, characterized in that said polymer comprises

(i) from 15 to 40 weight percent of one or more monomers selected from :

acrylonitrile and methacrylonitrile;

(ii) from 60 to 80 weight percent of one or more monomers selected from :

butadiene, isoprene, and chloroprene; and

(iii) optionally from 0.5 to 5 weight percent of one or more monomers selected from :

methyl acrylate, methy methacrylate, ethyl acrylate, ethyl methacrylate, butyl acrylate, butyl methacrylate, ethyl hexyl acrylate, ethyl hexyl methacrylate, hydroxyethyl acrylate, hydroxyethyl methacrylate, acrylamide, meth acrylamide, N-methylol acrylamide; N-methylol methacrylamide.

## Patentansprüche

1. Verfahren zur Behandlung von anionisch stabilisierten, in einem kontinuierlichen Flüssigmedium dispergierten Teilchen derart, daß sie mit kationischen Dispersionen oder Emulsionen kompatibel sind, wobei dieses System einen Gehalt an dispergierter Phase von mindestens 50 Gew.-% und einen pH-Wert von nicht weniger als 8,5 aufweist, wobei man das System mit einem Stabilisierungsmittel versetzt, das bei einem pH-Wert von 6,5 oder weniger als Kation wirkt und den pH-Wert des Systems auf weniger als 6,5 einstellt, dadurch gekennzeichnet, daß die anionische Dispersion oder Emulsion ein Dispergiermittel enthält, das bei einem pH-Wert zwischen 8,5 und 6,5 wirksam ist und aus Alkalisalzen von Naphthalinsulfonsäuren-Formaldehydkondensaten, Erdalkalisalzen von Ligninsulfonsäuren, sowie $C_{1-4}$-alkyl-aromatischen Sulfonsäuresalzen ausgewählt ist und vor der Erniedrigung des pH-Wertes des Systems auf weniger als 6,5 in einer Menge von 0,1 bis 2 Gewichtsteilen pro 100 Gewichtsteilen jener anionisch stabilisierten Teilchen vorhanden ist.

2. Verfahren nach Anspruch 1, dadurch gekennzeichnet, daß jenes bei einem pH-Wert von weniger als 6,5 wirksame Stabilisierungsmittel in einer Menge von 3 bis 10 Gew.-% bezüglich des Gewichts jener anionisch stabilisierten Teilchen zugegeben wird.

3. Verfahren nach Anspruch 2, dadurch gekennzeichnet, daß es sich bei jenem Flüssigmedium um Wasser und bei jenen anionisch stabilisierten Teilchen um Polymerteilchen handelt, die ausgewählt sind aus:
   (a) Copolymeren aus:
      (i) 20 bis 80 Gew.-% eines gegebenenfalls durch ein Chloratom substituierten $C_{4-6}$-aliphatischen konjugierten Diolefins;
      (ii) 80 bis 20 Gew.-% eines oder mehrerer Monomere ausgewählt aus:
      gegebenenfalls durch einen $C_{1-4}$-Alkylrest oder ein Chlor- oder Bromatom substituierte $C_{8-2}$-vinyl- oder -vinyliden-aromatischen Monomeren, $C_{1-2}$-Alkylester von Acryl- oder Methacrylsäuremonomeren und
      (iii) gegebenenfalls 0,5 bis 10 Gew.-% eines oder mehrerer Monomere ausgewählt aus:
      $C_{1-8}$-Alkyl- oder -Hydroxyalkylester von $C_{3-6}$-ethylenisch ungesättigten Carbonsäuren; sowie gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren;
   (b) Co- oder Homopolymeren aus:
      (i) 80 bis 100 Gew.-% einer Mischung aus 60 bis 100 Gew.-% eines oder mehrerer $C_{1-8}$-Alkyl- oder -Hydroxyalkylester einer $C_{3-4}$-ethylenisch ungesättigten Carbonsäure sowie bis zu 40 Gew.-% eines gegebenenfalls durch einen $C_{1-4}$-Alkylrest oder ein Chloratom substituierten $C_{8-12}$-vinyl- oder -vinyliden-aromatischen Monomers; sowie
      (ii) gegebenenfalls 0,5 bis 10 Gew.-% eines oder mehrerer Monomere ausgewählt aus:
      $C_{1-8}$-Alkyl- oder -Hydroxyalkylester von $C_{3-6}$-ethylenisch ungesättigten Carbonsäuren; sowie gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren;
   (c) Copolymeren aus:
      (i) bis zu 40 Gew.-% eines $C_{3-6}$-Alkenylnitrils;
      (ii) mindestens 60 Gew.-% eines $C_{4-6}$-konjugierten Diolefins; sowie
      (iii) gegebenenfalls 0,5 bis 10 Gew.-% eines oder mehrerer Monomere ausgewählt aus:
      $C_{1-8}$-Alkyl- oder -Hydroxyalkylester von $C_{3-6}$-ethylenisch ungesättigten Carbonsäuren; sowie gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren;
   (d) Copolymeren aus:
      (i) bis zu 25 Gew.-% eines $C_{2-3}$-Olefins;
      (ii) mindestens 75 Gew.-% eines oder mehrerer Monomere ausgewählt aus: $C_{2-6}$-Alkenyl- oder -Hydroxyalkenylester von $C_{1-6}$-gesättigten Carbonsäuren sowie $C_{1-6}$-Alkyl- oder -Hydroxyalkylester von $C_{3-6}$-ethylenisch ungesättigten Carbonsäuren;
      (iii) sowie gegebenenfalls 0,5 bis 10 Gew.-% eines oder mehrerer Monomere ausgewählt aus:
      $C_{1-8}$-Alkyl- oder -Hydroxyalkylester von $C_{3-6}$-ethylenisch ungesättigten Carbonsäuren; sowie

gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren; sowie

(e) Naturkautschuk

(f) Co- oder Homopolymeren aus:

(i) 85 bis 100 Gew.-% eines oder mehrerer Monomere ausgewählt aus:
gegebenenfalls durch ein Chloratom substituierten $C_{4-6}$-aliphatischen konjugierten Diolefinen; sowie

(ii) bis zu 15 Gew.-% eines oder mehrerer Monomere ausgewählt aus:
$C_{1-8}$-Alkyl- oder -Hydroxyalkylester von $C_{3-6}$-ethylenisch ungesättigten Carbonsäuren; sowie gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren;

(g) Co- oder Homopolymeren aus:

(i) 85 bis 100 Gew.-% eines oder mehrerer Monomere ausgewählt aus:
gegebenenfalls durch einen $C_{1-4}$-Alkylrest oder ein Chlor- oder Bromatom substituierte $C_{8-12}$-vinyl- oder -vinyliden-aromatischen Monomeren; sowie

(ii) bis zu 15 Gew.-% eines oder mehrerer Monomere ausgewählt aus:
$C_{1-8}$-Alkyl- oder -Hydroxyalkylester von $C_{3-6}$-ethylenisch ungesättigten Carbonsäuren; sowie gegebenenfalls am Stickstoffatom durch bis zu zwei Substituenten ausgewählt aus der umfassenden Gruppe $C_{1-4}$-Alkyl- und -Hydroxyalkylreste substituierte Amide von $C_{3-6}$-ethylenisch ungesättigten Carbonsäuren;

**4.** Verfahren nach Anspruch 3, dadurch gekennzeichnet, daß jener bei einem pH-Wert von weniger als 6,5 wirksame Stabilisator in einer Menge von 5 bis 10 Gew.-% bezüglich jenes Polymers vorhanden ist und einem Amin der Formel

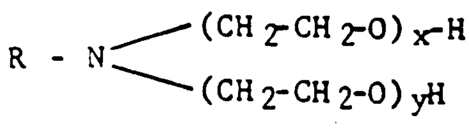

entspricht, worin R ein $C_{10-18}$-Alkenylrest und x und y ganze Zahlen darstellen und die Summe von x + y 2 bis 20 beträgt.

**5.** Verfahren nach Anspruch 4, dadurch gekennzeichnet, daß jenes Polymer aus:

(i) 30 bis 70 Gew.-% eines oder mehrerer Monomere ausgewählt aus:
Styrol, Alpha-Methylstyrol, Chlorstyrol;

(ii) 69,5 bis 25 Gew.-% eines oder mehrerer Monomere ausgewählt aus:
Butadien, Isopren sowie Chloropren; sowie

(iii) 0,5 bis 5 Gew.-% eines oder mehrerer Monomere ausgewählt aus:
Methylacrylat, Methylmethacrylat, Ethylacrylat, Ethylmethacrylat, Butylacrylat, Butylmethacrylat, Ethylhexyl-Acrylat, Ethylhexyl-Methacrylat, Hydroxyethyl-Acrylat, Hydroxyethyl-Methacrylat, Acrylamid, Methacrylamid, N-Methylol-Acrylamid, N-Methylol-Methacrylamid

besteht.

**6.** Verfahren nach Anspruch 4, dadurch gekennzeichnet, daß jenes Polymer aus:

(i) mindestens 95 Gew.-% eines oder mehrerer Monomere ausgewählt aus: Methylmethacrylat, Methylacrylat, Propylmethacrylat, Propylacrylat, Butylmethacrylat, Butylacrylat, Ethylhexyl-Acrylat, Ethylhexyl-Methacrylat, Hydroxyethylacrylat sowie Hydroxyethyl-Methacrylat;

(ii) gegebenenfalls 0,5 bis 5 Gew.-% eines oder mehrerer Monomere ausgewählt aus:
Acrylamid, Methacrylamid, N-Methylol-Acrylamid, N-Methylol-Methacrylamid

besteht.

**7.** Verfahren nach Anspruch 4, dadurch gekennzeichnet, daß jenes Polymer aus:

(i) 10 bis 25 Gew.-% Ethylen oder Propylen;

(ii) 75 bis 90 Gew.-% eines oder mehrerer Monomere ausgewählt aus:

Vinylacetat, Methylmethacrylat, Methylacrylat, Ethylmethacrylat sowie Ethylacrylat; sowie
(iii) gegebenenfalls 0,5 bis 5 Gew.-% eines oder mehrerer Monomere ausgewählt aus:
Methylacrylat, Methylmethacrylat, Ethylacrylat, Ethylmethacrylat, Butylacrylat, Butylmethacrylat, Ethylhexyl-Acrylat, Ethylhexyl-Methacrylat, Hydroxyethyl-Acrylat, Hydroxyethyl-Methacrylat, Acrylamid, Methacrylamid, N-Methylol-Acrylamid, N-Methylol-Methacrylamid
besteht.

**8.** Verfahren nach Anspruch 4, dadurch gekennzeichnet, daß jenes Polymer aus
(i) 15 bis 40 Gew.-% eines oder mehrerer Monomere ausgewählt aus:
Acrylnitril sowie Methacrylnitril;
(ii) 60 bis 80 Gew.-% eines oder mehrerer Monomere ausgewählt aus:
Butadien, Isopren sowie Chloropren; sowie
(iii) gegebenenfalls 0,5 bis 5 Gew.-% eines oder mehrerer Monomere ausgwählt aus:
Methylacrylat, Methylmethacrylat, Ethylacrylat, Ethylmethacrylat, Butylacrylat, Butylmethacrylat, Ethylhexyl-Acrylat, Ethylhexyl-Methacrylat, Hydroxyethyl-Acrylat, Hydroxyethyl-Methacrylat, Acrylamid, Methacrylamid, N-Methylol-Acrylamid, N-Methylol-Methacrylamid
besteht.

## Revendications

**1.** Procédé de traitement de particules anioniquement stabilisées, dispersées dans un milieu liquide continu, en sorte qu'elles soient compatibles avec des émulsions ou dispersions cationiques, le système concerné possédant une teneur en phase dispersée d'au moins 50% en poids et un pH non inférieur à 8,5, caractérisé en ce que l'on ajoute au système en question un agent stabilisant qui est cationique et efficace à une valeur de pH de 6,5 ou de de moins de 6,5 et on ajuste le pH du système à moins de 6,5, caractérisé en ce que l'émulsion ou la dispersion anionique contient un agent dispersif qui est efficace à un pH qui varie de 8,5 à 6,5 et est choisi parmi les sels de métaux alcalins de produits de condensation du type naphtalèneformaldéhydesulfonate, les sels de métaux alcalino-terreux de lignosulfonates et les sels d'alkyl($C_1$-$C_4$)aromaticosulfonates et cet agent dispersif est présent en une proportion de 0,1 à 2 parties en poids par 100 parties en poids des particules anioniquement stabilisées précitées, avant d'abaisser le pH du système jusqu'à une valeur inférieure à 6,5.

**2.** Procédé suivant la revendication 1, caractérisé en ce que l'on ajoute l'agent stabilisant efficace à un pH inférieur à 6,5 en une proportion de 3 à 10% en poids, sur base du poids des particules anioniquement stabilisées précitées.

**3.** Procédé suivant la revendication 2, caractérisé en ce que le milieu liquide est de l'eau et les particules anioniquement stabilisées en question sont des particules polymériques, que l'on choisit parmi :
(a) des copolymères comprenant :
(i) de 20 à 80% en poids d'une dioléfine aliphatique, conjuguée, en $C_4$ à $C_6$, qui n'est pas substituée ou qui est substituée par un atome de chlore,
(ii) de 80 à 20% en poids d'un ou plusieurs monomères choisis parmi :
les monomères vinyl- ou vinylidène-aromatiques en $C_8$ à $C_{12}$, qui peuvent ne pas être substitués ou être substitués par un radical alkyle en $C_1$ à $C_4$, ou un atome de chlore ou de brome, des monomères du type ester alkylique en $C_1$-$C_2$ de l'acide acrylique ou de l'acide méthacrylique et
(iii) facultativement de 0,5 à 10% en poids d'un ou plusieurs monomères choisis parmi :
les esters hydroxyalkyliques ou alkyliques en $C_1$-$C_8$ d'acide carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués sur l'atome d'azote par jusqu'à deux substituants choisis parmi :
les radicaux hydroxyalkyle et alkyle en $C_1$-$C_4$,
(b) des copolymères ou des homopolymères comprenant :
(i) de 80 à 100% en poids d'un mélange constitué de 60 à 100% en poids d'un ou plusieurs esters hydroxyalkyliques ou alkyliques en $C_1$ à $C_8$ d'un acide carboxylique à insaturation éthylénique, en $C_3$ à $C_4$ et de jusqu'à 40% en poids d'un monomère vinyl- ou vinylidène-aromatique en $C_8$ à $C_{12}$, qui peut ne pas être substitué ou être substitué par un radical alkyle en $C_1$-$C_4$ ou un atome de chlore et
(ii) facultativement, de 0,5 à 10% en poids d'un ou plusieurs monomères choisis parmi :

les esters hydroxyalkyliques ou alkyliques en $C_1$ à $C_8$ d'acides carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués sur l'atome d'azote par jusqu'à deux substituants choisis parmi:
les radicaux hydroxyalkyle et alkyle en $C_1$ à $C_4$,
(c) des copolymères comprenant :
(i) jusqu'à 40% en poids d'un alcényl($C_3$-$C_6$)nitrile,
(ii) au moins 60% d'une dioléfine conjuguée, en $C_4$ à $C_6$ et
(iii) facultativement, de 0,5 à 10% en poids d'un ou plusieurs monomères choisi parmi :
les esters hydroxyalkyliques ou alkyliques en $C_1$ à $C_8$ d'acides carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués sur l'atome d'azote par jusqu'à deux substituants choisis parmi :
les radicaux hydroxyalkyle et alkyle en $C_1$ à $C_4$,
(d) des copolymères comprenant :
(i) jusqu'à 25% en poids d'une oléfine en $C_2$-$C_3$,
(ii) au moins 75% en poids d'un ou plusieurs monomères choisis parmi :
les esters hydroxyalcényliques ou alcényliques en $C_2$-$C_6$ d'acides carboxyliques saturés en $C_1$ à $C_6$ et les esters hydroxyalkyliques ou alkyliques en $C_1$ à $C_6$ d'acides carboxyliques à insaturation éthylénique, en $C_3$ à $C_6$,
(iii) et, facultativement, de 0,5 à 10% en poids d'un ou plusieurs monomères choisis parmi :
les esters hydroxyalkyliques ou alkyliques en $C_1$ à $C_8$ d'acides carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués dur l'atome d'azote par jusqu'à deux substituants choisis parmi :
les radicaux hydroxyalkyle et alkyle en $C_1$ à $C_4$ et
(e) du caoutchouc naturel,
(f) des copolymères ou des homopolymères comprenant :
(i) de 85 à 100% en poids d'un ou plusieurs monoçmères choisis parmi :
des dioléfines aliphatiques, conjuguées en $C_4$ à $C_6$, qui peuvent ne pas être substituées ou être substituées par un atome de chlore et
(ii) jusqu'à 15% en poids d'un ou plusieurs monomères choisis parmi :
les esters hydroxyalkyliques ou alkyliques en $C_1$ à $C_8$ d'acides carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués sur l'atome d'azote par jusqu'à deux substituants choisis parmi :
les radicaux hydroxyalkyle et alkyle en $C_1$ à $C_4$,
(g) des copolymères ou des homopolymères comprenant :
(i) de 85 à 100% en poids d'un ou plusieurs monomères choisis parmi :
des monomères vinyl- ou vinylidène-aromatiques en $C_8$ à $C_{12}$, qui peuvent ne pas être substitués ou être substitués par un radical alkyle en $C_1$ à $C_4$, ou un atome de chlore ou de brome et
(ii) jusqu'à 15% en poids d'un ou plusieurs monomères choisis parmi :
les esters hydroxyalkyliques ou alkyliques en $C_1$ à $C_8$ d'acides carboxyliques à insaturation éthylénique, en $C_3$ à $C_6$ et les amides d'acides carboxyliques à insaturation éthylénique, en $C_3$ à $C_6$, amides qui peuvent ne pas être substitués ou être substitués sur l'atome d'azote par jusqu'à deux substituants choisis parmi :
les radicaux hydroxyalkyle et alkyle en $C_1$ à $C_4$.

**4.** Procédé suivant la revendication 3, caractérisé en ce que l'agent stabilisant précité, efficace à un pH inférieur à 6,5, est présent en une proportion de 5 à 10% en poids par rapport au polymère précité et est une amine qui répond à la formule

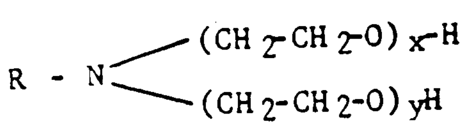

dans laquelle R représente un radical alcényle comportant de 10 à 18 atomes de carbone et x et y sont des nombres entiers dont la somme varie de 2 à 20.

**5.** Procédé suivant la revendication 4, caractérisé en ce que le polymère comprend :
(i) de 30 à 70% en poids d'un ou plusieurs monomères choisi parmi :
le styrène, l'$\alpha$-méthylstyrène, le chlorostyrène,
(ii) de 69,5 à 25% en poids d'un ou plusieurs monomères choisis parmi :
le butadiène, l'isoprène et le chloroprène et
(iii) de 0,5 à 5% en poids d'un ou plusieurs monomères choisis parmi :
l'acrylate de méthyle, le méthacrylate de méthyle, l'acrylate d'éthyle, le méthacrylate d'éthyle, l'acrylate d ebutyle, le méthacrylate de butyle, l'acrylate d'éthylhexyle, le méthacrylate d'éthylhexyle, l'acrylate d'hydroxyéthyle, le méthacrylate d'hydroxyéthyle, l'acrylamide, le méthacrylamide, le N-méthylolacrylamide et le N-méthylolméthacrylamide.

**6.** Procédé suivant la revendication 4, caractérisé en ce que le polymère comprend :
(i) au moins 95% en poids d'un ou plusieurs monomères choisis parmi :
le méthacrylate de méthyle, l'acrylate de méthyle, le méthacrylate de propyle, l'acrylate de propyle, le méthacrylate de butyle, l'acrylate de butyle, l'acrylate d'éthylhexyle, le méthacrylate d'éthylhexyle, l'acrylate d'hydroxyéthyle et le méthacrylate d'hydroxyéthyle,
(ii) facultativement, de 0,5 à 5% en poids d'un ou plusieurs monomères choisis parmi :
l'acrylamide, le méthacrylamide, le N-méthylolacrylamide et le N-méthylolméthacrylamide.

**7.** Procédé suivant la revendication 4, caractérisé en ce que le polymère comprend :
(i) de 10 à 25% en poids d'éthylène ou de propylène,
(ii) de 75 à 90% en poids d'un ou plusieurs monomères choisis parmi :
l'acétate de vinyle, le méthacrylate de méthyle, l'acrylate de méthyle, le méthacrylate d'éthyle et l'acrylate d'éthyle et
(iii) facultativement, de 0,5 à 5% en poids d'un ou plusieurs monomères choisis parmi :
l'acrylate de méthyle, le méthacrylate de méthyle, l'acrylate d'éthyle, le méthacrylate d'éthyle, l'acrylate de butyle, le méthacrylate de butyle, l'acrylate d'éthylhexyle, le méthacrylate d'éthylhexyle, l'acrylate d'hydroxyéthyle, le méthacrylate d'hydroxyéthyle, l'acrylamide, le méthacrylamide, le N-méthylolacrylamide et le N-méthylolméthacrylamide.

**8.** Procédé suivant la revendication 4, caractérisé en ce que le polymère comprend :
(i) de 15 à 40% en poids d'un ou plusieurs monomères choisis parmi :
l'acrylonitrile et le méthacrylonitrile,
(ii) de 60 à 80% en poids d'un ou plusieurs monomères choisis parmi :
le butadiène, l'isprène et le chloroprène et
(iii) facultativement, de 0,5 à 5% en poids d'un ou plusieurs monomères choisis parmi :
l'acrylate de méthyle, le méthacrylate de méthyle, l'acrylate d'éthyle, le méthacrylate d'éthyle, l'acrylate de butyle, le méthacrylate de butyle, l'acrylate d'éthylhexyle, le méthacrylate d'éthylhexyle, l'acrylate d'hydroxyéthyle, le méthacrylate d'hydroxyéthyle, l'acrylamide, le méthacrylamide, le N-méthylolacrylamide et le N-méthylolméthacrylamide.